# EUROPÄISCHE PATENTSCHRIFT

(11) **EP 0 797 858 B1**
(45) Veröffentlichungstag und Bekanntmachung des Hinweises auf die Patenterteilung: **25.10.2000**
(21) Anmeldenummer: 95942678.4
(22) Anmeldetag: 15.12.1995
(51) Int. Cl.: H02K 5/10, B60T 8/40

(54) **Elektromotor mit Membran für den Druckausgleich**
Electric motor comprising a pressure compensating membrane
Moteur électrique comportant une membrane pour équilibrer la pression

(30) Priorität: 15.12.1994 DE 4444643
(43) Veröffentlichungstag der Anmeldung: 01.10.1997
(73) Patentinhaber: Continental Teves AG & Co. oHG, 60488 Frankfurt (DE)
(72) Erfinder: VOLZ, Peter, D-64291 Darmstadt (DE); REINARTZ, Hans-Dieter, D-60439 Frankfurt am Main (DE); DINKEL, Dieter, D-65817 Eppstein (DE)
(86) Internationale Anmeldenummer: EP9504979
(87) Internationale Veröffentlichungsnummer: WO9619029

(56) Entgegenhaltungen:
- EP-A- 0 682 398
- DE-A- 4 235 962
- DE-A- 4 240 044
- DE-U- 9 107 992

## Beschreibung

Die Erfindung bezieht sich auf einen Elektromotor gemäß dem Oberbegriff des Anspruchs 1.

Ein derartiger Elektromotor ist z.B. in der DE 42 35 962 A1 dargestellt. Für diesen Motor soll ein Druckausgleich zwischen dem Inneren des Motorgehäuses und Außenluft vorgesehen werden. Dabei ist zu berücksichtigen, daß der Motor in einem Fahrzeug eingesetzt werden soll, also extremen äußeren Einflüssen ausgesetzt ist.

Aus der nicht vorveröffentlichten EP 682 398 A1 geht eine Motorentlüftung mit einer an einem Lagerschild angeordneten Membran hervor. Der Schild weist jedoch keinen sich axial erstreckenden Kragen auf, in dem die Membran angeordnet werden könnte.

Es ist aber auch aus anderen Schriften bekannt, zum Druckausgleich PTFE-Membranen einzusetzen, die in einem Verbindungskanal zwischen dem Innenraum des Motorgehäuses und der Außenluft angeordnet sind. Ein Beispiel hierfür ist in der EP 600 271 A1 beschrieben. Die dort vorgeschlagene Anordnung ist aber nicht für den vorgesehenen Einsatzbereich geeignet. Die Membran soll nämlich relativ leicht zu befestigen sein, andererseits soll sie im Gebrauch nicht durch äußere Einflüsse entfernt werden können.

Zur Lösung des Problems wird vorgeschlagen, eine Anordnung der Membran vorzusehen, wie sie im Hauptanspruch vorgeschlagen wird. Aus den Unteransprüchen ergeben sich vorteilhafte Ausgestaltungen.

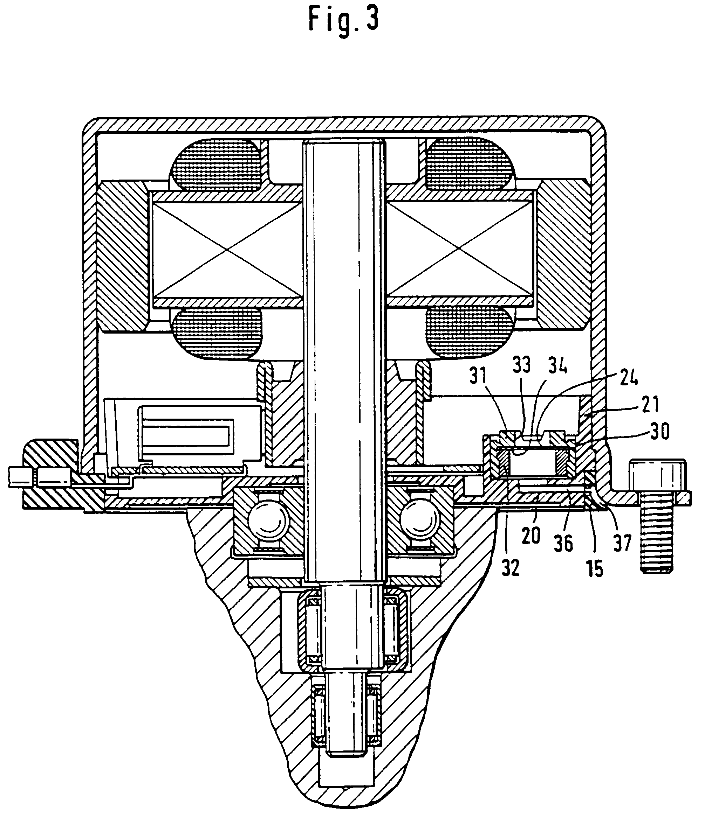

Die Erfindung soll anhand von vier Figuren näher dargestellt werden. Jede Figur zeigt einen Querschnitt durch ein Elektromotor/Pumpen-Aggregat, wobei in Figur 3 die Membran nicht im Kragen sondern in einer flachen Platte des Schildes angeordnet ist. Figur 3 dient lediglich zur Veranschaulichung einer Befestigungsart der Membran.

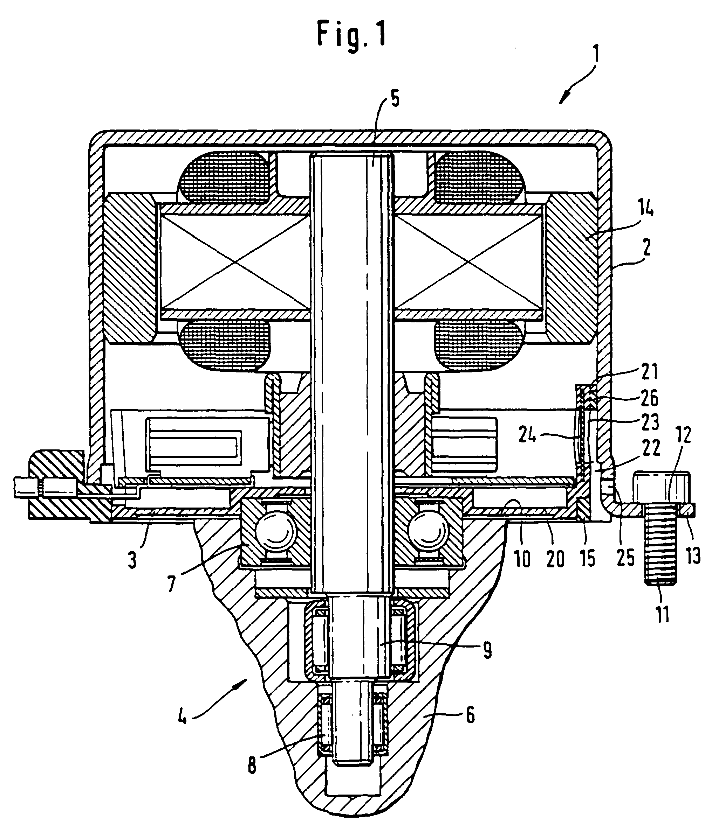

Der generelle Aufbau der Motor/Pumpen-Aggregate ist in allen Fällen gleich, so daß die ausführliche Beschreibung der Fig. 1 in gleicher Weise für die folgenden Figuren gilt.

Der Elektromotor 1 besteht aus einem topfförmigen Gehäuse 2, in dessen offenes Ende ein Schild 3 eingesetzt ist. Eine Motorwelle 5 ist in der Achse des Gehäuses 2 angeordnet und durch das Schild 3 hindurch aus dem Elektromotor 1 herausgeführt. An der Innenseite des Gehäuses sind Magnete 14 angeklebt. Der Elektromotor 1 ist mit einer Pumpe 4 verbunden. Das Gehäuse 6 der Pumpe 4 besteht aus einem Aluminiumblock, in dem Lager 7,8 angeordnet sind, die die Motorwelle 5 tragen. Nicht dargestellt sind die Kolben der Pumpe, die an einem exzentrischen Bereich 9 der Motorwelle 5 anliegen. Ebenfalls nicht dargestellt sind elektromagnetische Ventile, die im Pumpengehäuse 6 vorgesehen sind, um die Druckmittelabgabe der Pumpe 4, z.B. an ein Bremssystem, zu steuern. Wesentlich ist, daß das Pumpengehäuse 6 eine flache Flanschfläche 10 aufweist. An dieser Seite des Pumpengehäuses 6 mit der Flanschfläche wird der Elektromotor 1 befestigt, so daß der Schild 3 zur Anlage an die Flanschfläche 10 gelangt. Die Befestigung selbst erfolgt durch Schrauben 11, die durch Öffnungen 12 in einem radial nach außen weisenden Kragen 13 am Gehäuse 2 des Elektromotors hindurchgeführt sind und in Schraublöcher im Pumpengehäuse 6 eingeschraubt werden.

Um zu verhindern, daß Feuchtigkeit in das Innere des Motorgehäuses, als auch in den Lagerbereich der Motorwelle gelangt, ist eine umlaufende Dichtung 15 vorgesehen, die zwischen dem Schild 3 und dem Rand des topfförmigen Gehäuses 2 angeordnet ist. Die Figuren zeigen die nicht belastete Form der Dichtung 15, wobei zu erkennen ist, daß die Dichtung über den Schild 3 herausragt, um somit beim Zusammenbau von Elektromotor 1 und Pumpe 4 auf die Flanschfläche 10 gequetscht wird. Auf diese Weise kann sicher die eben beschriebene Dichtfunktion erzielt werden.

Wie schon weiter oben erläutert, ist es notwendig, einen Druckausgleich zwischen dem Inneren des Motorgehäuses 2 und der Außenluft vorzusehen. Der Druckausgleich wird durch einen Luftaustausch bewirkt, wobei keine Feuchtigkeit in das Innere des Motorgehäuses gelangen darf. Daher sind Filterelemente vorgesehen, z.B. PTFE-Membrane, die in einem Verbindungskanal zwischen dem Motorinneren und -äußeren angeordnet sind.

Gemäß der Ausführung nach Fig. 1 besteht der Schild 3 aus einer im wesentlichen flachen Platte 20, die sich senkrecht zur Motorwelle 5 erstreckt, mit einen Kragen 21, der sich vom Rand der Platte 20 aus in axialer Richtung ins Innere des Motorgehäuses erstreckt und dessen Außenrand am Innenrand des topfförmigen Gehäuses 2 anliegt. Der Kragen 21 verläuft nahezu vollständig in Umfangsrichtung am Rand der Platte 20 entlang. Er dient dazu, das Gehäuse 2 hinsichtlich des Schildes 3 zu zentrieren. Da das Schild 3 am aus dem Pumpengehäuse 6 herausragenden Lager 7 abgestützt ist, ergibt sich eine Zentrierung des Motorgehäuses 2 zur Motorwelle 5.

In einem Teilbereich ist der Kragen 21 mit einem sich axial erstreckenden Schlitz 22 versehen, der sich radial nach außen öffnet. Dieser Schlitz 22 setzt sich fort in der umlaufenden Dichtung 15, die in der Regel an den Schild 3 angespritzt wird. Zwischen der Innenwand des Gehäuses 2 und dem Außenrand des Kragens 21 erstreckt sich somit ein Freiraum oder Schlitz 22. Der obere Teil des Freiraumes ist mit dem Innenraum des Motorgehäuses über einen kreisförmigen Durchlaß 23 verbunden. In diesem Durchlaß 23 ist eine Membran 24 angeordnet. In der Ausführung nach Fig. 1 ist der Rand der Membran 24 vom Material des Schildes 3 bzw. des Kragens 21 umspritzt. Das heißt, die Membran 24 wird bei der Herstellung des Schildes, der aus Kunststoff besteht, mit eingeformt.

Der Schlitz 22 erstreckt sich bis zur Flanschfläche 10. Der weitere Luftaustausch erfolgt über den Bereich zwischen dem Kragen 13 und der Flanschfläche 10 im Bereich der Schraube 11. Dieser Bereich ist nicht gedichtet, so daß ein geringer Luftaustausch erfolgen kann.

Um den Luftaustausch zu verbessern, kann im zylindrischen Bereich des Gehäuses 2 eine Lüftungsbohrung 25 vorgesehen werden. Dabei ist die Bohrung 25 gegenüber dem Durchlaß 23 versetzt, so daß kleine Gegenstände, die möglicherweise durch die Lüftungsbohrung 25 hindurchgeführt werden, nicht unmittelbar die Membran 24 treffen. Sehr vorteilhaft ist auch, wenn der Kopf der Schraube 11 sich vor der Lüftungsbohrung 25 befindet.

Da die Abdichtung durch den umlaufenden Dichtring 15 im Bereich des Schlitzes 22 unterbrochen ist, wird die Dichtung 15 in axialer Richtung U-förmig erweitert, wobei der Bogen 26 des U's um den Durchlaß 23 herum verläuft.

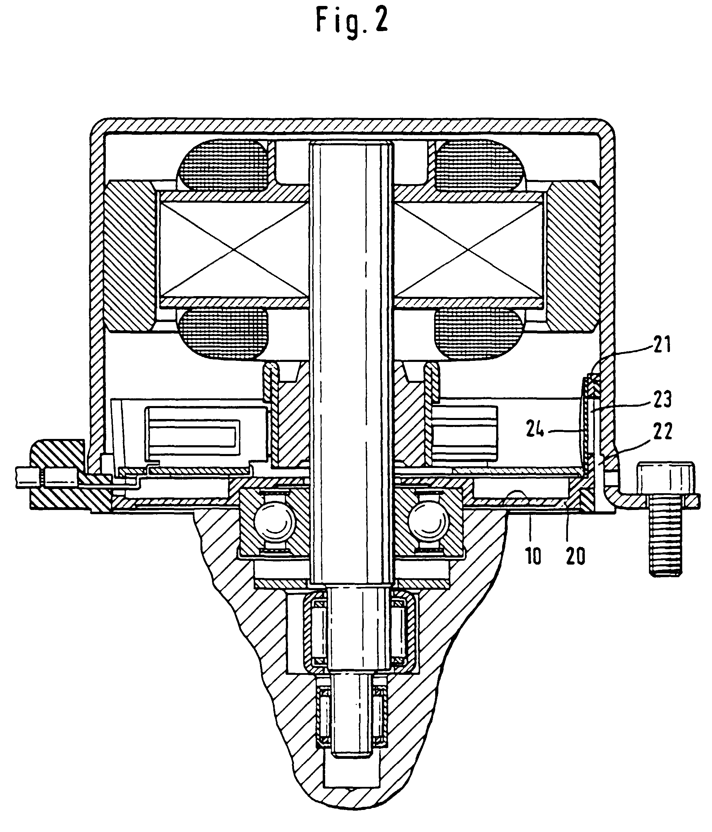

Die Membran 24 kann natürlich auch, wie in Fig. 2 dargestellt, von innen auf den Durchbruch 23 aufgeklebt werden.

Ansonsten entspricht die Ausführung nach Figur 2 der nach Figur 1.

Die Ausführung gemäß Fig. 3 unterscheidet sich von den bisher diskutierten Ausführungsformen im wesentlichen dadurch, daß die Membran 24 nicht im Kragen 21 des Schildes 3, sondern auf der Platte 20 angeordnet ist. Die Membran 24 erstreckt sich somit nicht in axialer Richtung zur Motorwelle 5, sondern senkrecht zu ihr.

Die in der Fig. 3 dargestellte Befestigungsart mit Hilfe einer Kapsel 30 läßt sich natürlich übertragen auf eine Befestigung am Kragen 21. Insofern gelten die nun folgenden Ausführungen auch für die Ausführungsformen nach Fig. 1 und Fig. 2.

Die Kapsel 30 besteht aus zwei Teilen, nämlich einem Aufnahmekörper 31 und einer Befestigungshülse 32. Der Aufnahmekörper 31 weist einen zentralen Durchbruch 33 auf, an den sich eine umlaufende Kante 34 anschließt. Auf diese Kante 34 wird der Außenbereich der Membran 24 aufgelegt. In den Aufnahmekörper 31 wird nun die Befestigungshülse 32 eingesteckt, deren eine Stirnseite der umlaufenden Kante 34 gegenüberliegt und so die Membran 24 zwischen der Kante 34 und der Stirnseite der Hülse 32 einklemmt. Die Hülse 32 wird mit Hilfe von Rasten im Aufnahmekörper 31 gehalten.

Die Kapsel 30 kann nun in eine entsprechende Vertiefung am Schild 3 eingesetzt werden. Im Grund der Vertiefung mündet ein Kanal 36, der beim Herstellen des Schildes 3 mit ausgebildet wird. Der Kanal 36 setzt sich fort in einen Kanal 37 in der Dichtung 15.

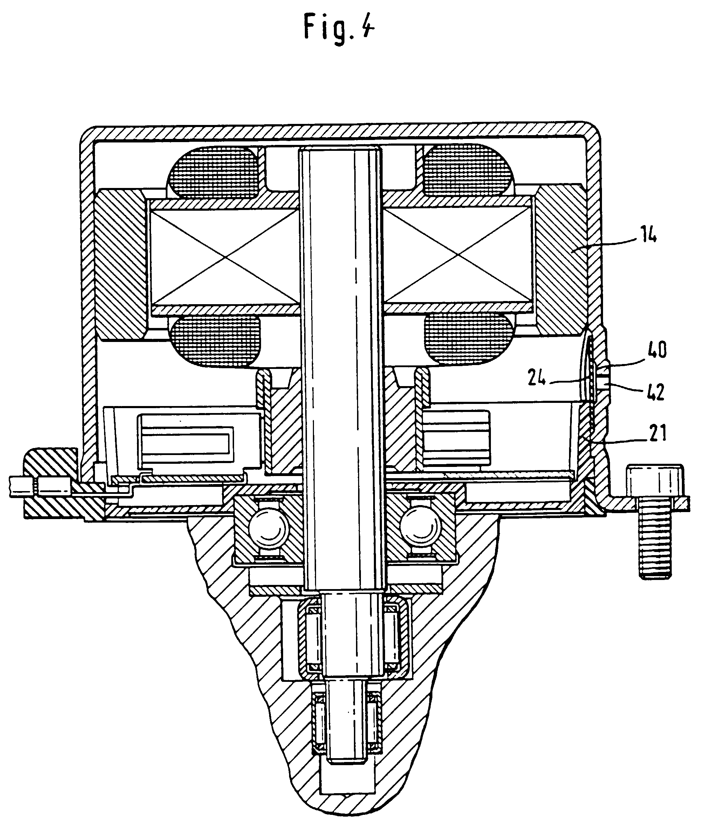

Mit Fig. 4 ist eine Ausführungsform gezeigt, bei der der Schild 3 die Membran 24 nicht im ganzen trägt, sondern als Sicherungselement für eine Membran 24 dient, die an der Innenwand des Gehäuses 2 befestigt ist. Dazu ist an der Innenwand des Gehäuses eine Vertiefung 40 vorgesehen. Diese Vertiefung entsteht, indem das Blech des Gehäuses 2 nach außen gedrückt wird. Die Vertiefung 40 ist in einem Bereich vorgesehen, der zwischen dem Magneten 14 und dem Rand des Gehäuses liegt.

In die Vertiefung 40 hinein mündet eine Querbohrung 42, die den Innenbereich des Gehäuses 2 mit der Außenluft verbindet. In die Vertiefung 40 hinein ist die Membran 24 eingeklebt. Der Kragen 21 ragt in dem Bereich der Vertiefung 40 hinein, so daß der obere Rand des Kragens 21 als Halteelement für die Membran 24 dient. Dieser Bereich hält einen Teil des äußeren Randes der Membran 24 gegen die Innenwand des Gehäuses 2 gedrückt.

### Bezugszeichenliste

- 1: Elektromotor
- 2: Gehäuse
- 3: Schild
- 4: Pumpe
- 5: Motorwelle
- 6: Gehäuse
- 7: Lager
- 8: Lager
- 9: Exzenter
- 10: Flanschfläche
- 11: Schrauben
- 12: Öffnungen
- 13: Kragen
- 14: Magnete
- 15: Dichtung
- 20: Platte
- 21: Kragen
- 22: Schlitz
- 23: Durchlaß
- 24: Membran
- 25: Lüftungsbohrung
- 26: Bogen
- 30: Kapsel
- 31: Aufnahmekörper
- 32: Befestigungshülse
- 36: Kanal
- 37: Kanal
- 40: Vertiefung
- 42: Querbohrung

## Patentansprüche

1. Elektromotor zum Antrieb einer Hydraulikpumpe, insbesondere für den Einsatz für ein Kraftfahrzeugbremssystem, mit einem topfförmigen Gehäuse (2), in dessen offenem Ende ein Schild (3) eingesetzt ist, durch den die Motorwelle (5) aus dem Gehäuse (2) herausragt, wobei eine im wesentlichen flache Seite des Schildes (3) auf einer Flanschfläche (10) des Gehäuses (6) der anzutreibenden Pumpe (4) flüssigkeitsdicht aufgesetzt werden kann, **dadurch gekennzeichnet, daß** der Schild (3) eine Membran (24) trägt oder hält, wobei die Membran (24) in einem Verbindungskanal (22,36) zwischen dem Inneren des Elektromotorgehäuses (2) und der Außenluft angeordnet ist, und daß der Schild (3) einen sich axial erstreckenden Kragen (21) aufweist, wobei die Membran (24) im Kragenbereich (21) angeordnet ist.

2. Elektromotor nach Anspruch 1, dadurch **gekennzeichnet**, daß zumindest ein Teilbereich des Verbindungskanals (36) im Schild (3) ausgebildet ist.

3. Elektromotor nach Anspruch 1, dadurch **gekennzeichnet**, daß im Bereich zwischen dem Rand des topfförmigen Gehäuses (2) und dem Schild (3) eine umlaufende Dichtung (15) vorgesehen ist, wobei ein Teilbereich des genannten Verbindungskanals (22) durch die Dichtung (15) verläuft.

4. Elektromotor nach einem der vorhergehenden Ansprüche, dadurch **gekennzeichnet**, daß der Schild (3) aus einem flachen Bereich (20) besteht, der sich senkrecht zur Motorwelle (5) erstreckt, und einem sich axial erstreckenden Kragen (21), dessen Außenrand an einem Innenrand des topfförmigen Gehäuses (2) anliegt.

5. Elektromotor nach Anspruch 1, dadurch **gekennzeichnet**, daß am Außenrand des Kragens (21) ein Schlitz (22) vorgesehen ist, der, durch das Gehäuse (2) abgedeckt, einen Teilbereich des Verbindungskanals bildet.

6. Elektromotor nach Anspruch 1, dadurch **gekennzeichnet**, daß die Membran (24) unmittelbar an der Innenseite des topfförmigen Gehäuses (2) angeordnet ist, und daß zumindest ein Teilbereich des Schildes (3) die Membran (24) an der Gehäusewand hält.

7. Elektromotor nach einem der vorhergehenden Ansprüche, dadurch **gekennzeichnet**, daß die Membran (24) am Gehäuse (2) bzw. am Schild (3) angeklebt ist.

8. Elektromotor nach einem der Ansprüche 1 bis 6, dadurch **gekennzeichnet**, daß das Schild (3) aus Kunststoff besteht, und daß die Membran (24) bei der Herstellung des Schildes (3) mit umspritzt wird, so daß der Randbereich der Membran (24) fest und unlösbar mit dem Schild (3) verbunden ist.

9. Elektromotor nach einem der Ansprüche 1 bis 6, dadurch **gekennzeichnet**, daß die Membran (24) in einer Kapsel (30) angeordnet ist, die in eine Ausnehmung am Schild (3) einsteckbar ist.

10. Elektromotor nach Anspruch 9, dadurch **gekennzeichnet**, daß die Kapsel aus zwei zusammensteckbaren Teilen (31,32) besteht, die die Membran (24) zwischen sich einklemmen.

## Claims

1. Electric motor for driving a hydraulic pump, in particular, for use in a brake system in motor vehicles, comprising a pot-shaped housing (2), into the open end of which a shield (3) is inserted, and the motor shaft (5) extends from the housing (2) through the aforementioned shield, and wherein an essentially flat side of the shield (3) can be attached to a flange surface (10) of the housing (6) of the pump to be driven (4) in a fluid-tight fashion,
**characterized** in that the shield (3) carries or holds a membrane (24), with said membrane (24) being arranged in a connecting channel (22,36) between the interior of the electric motor housing (2) and the external air, and in that the shield (3) includes an axially extending collar (21), and the membrane (24) is arranged in the region of the collar (21).

2. Electric motor as claimed in claim 1,
**characterized** in that at least part of the connecting channel (36) is arranged in the shield (3).

3. Electric motor as claimed in claim 1,
**characterized** in that a circumferential seal (15) is provided within the region between the edge of the pot-shaped housing (2) and the shield (3), with part of the aforementioned connecting channel (22) extending through the seal (15).

4. Electric motor as claimed in any one of the preceding claims,
**characterized** in that the shield (3) consists of a flat region (2) that extends perpendicular to the motor shaft (5) and an axially extending collar (21), the outer edge of which bears against an inner edge of the pot-shaped housing (2).

5. Electric motor as claimed in claim 1,
**characterized** in that a slot (22) is provided on the outer edge of the collar (21), with said slot being covered by the housing (2) and forming part of the connecting channel.

6. Electric motor as claimed in claim 1,
**characterized** in that the membrane (24) is arranged directly on the inner side of the pot-shaped housing (2), and in that at least a partial region of the shield (3) holds the membrane (24) on the housing wall.

7. Electric motor as claimed in any one of the preceding claims,
**characterized** in that the membrane (24) is bonded onto the housing (2) or the shield (3).

8. Electric motor as claimed in any one of claims 1 to 6,
**characterized** in that the shield (3) consists of a plastic material, and in that the membrane (24) is sprayed on during the manufacture of the shield (3) such that the edge region of the membrane (24) is rigidly and undetachably connected to the shield (3).

9. Electric motor as claimed in any one of claims 1 to 6,
**characterized** in that the membrane (24) is arranged in a capsule (30) that can be inserted into a recess in the shield (3).

10. Electric motor as claimed in claim 9,
**characterized** in that the capsule consists of two parts (31, 32) that can be connected to one another, with the membrane (24) being clamped between the two aforementioned parts.

## Revendications

1. Moteur électrique pour entraîner une pompe hydraulique, à utiliser notamment pour un système de freinage de véhicule automobile, comportant un boîtier (2) en forme de pot, dans l'extrémité ouverte duquel est inséré un flasque (3) à travers lequel l'arbre (5) du moteur dépasse hors du boîtier (2), un côté essentiellement plat du flasque (3) pouvant être posé en étanchéité aux liquides sur une face de bride (10) du boîtier (6) de la pompe (4) à entraîner, **caractérisé** en ce que le flasque (3) porte ou maintient une membrane (24), la membrane (24) étant disposée dans un canal de liaison (22, 36) entre l'intérieur du boîtier (2) du moteur électrique et l'air extérieur, et en ce que le flasque (3) présente un collet (21) s'étendant axialement, la membrane (24) étant disposée dans la région du collet (21).

2. Moteur électrique selon la revendication 1, **caractérisé** en ce qu'au moins une région partielle du canal de liaison (36) est formée dans le flasque (3).

3. Moteur électrique selon la revendication 1, **caractérisé** en ce qu'un joint d'étanchéité enveloppant (15) est prévu dans la région située entre le bord du boîtier (2) en forme de pot et le flasque (3), une région partielle du canal de liaison précité (22) s'étendant à travers le joint d'étanchéité (15).

4. Moteur électrique selon l'une quelconque des revendications précédentes, **caractérisé** en ce que le flasque (3) est constitué d'une région plate (20), qui s'étend perpendiculairement à l'arbre (5) du moteur, et d'un collet (21) s'étendant axialement, dont le bord extérieur s'applique contre un bord intérieur du boîtier (2) en forme de pot.

5. Moteur électrique selon la revendication 1, **caractérisé** en ce qu'une fente (22) est prévue sur le bord extérieur du collet (21), fente qui, recouverte par le boîtier (2), forme une région partielle du canal de liaison.

6. Moteur électrique selon la revendication 1, **caractérisé** en ce que la membrane (24) est disposée directement sur le côté intérieur du boîtier (2) en forme de pot, et en ce qu'au moins une région partielle du flasque (3) maintient la membrane (24) contre la paroi du boîtier.

7. Moteur électrique selon l'une quelconque des revendications précédentes, **caractérisé** en ce que la membrane (24) est collée sur le boîtier (2) ou sur le flasque (3).

8. Moteur électrique selon l'une quelconque des revendications 1 à 6, **caractérisé** en ce que le flasque (3) est réalisé en matière plastique, et en ce que la membrane (24) est conjointement enrobée par injection lors de la fabrication du flasque (3), de sorte que la région de bord de la membrane (24) est assemblée au flasque (3) de façon fixe et indétachable.

9. Moteur électrique selon l'une quelconque des revendications 1 à 6, **caractérisé** en ce que la membrane (24) est disposée dans un blindage (30) qui peut être emboîté dans un évidement prévu sur le flasque (3).

10. Moteur électrique selon la revendication 9, **caractérisé** en ce que le blindage est constitué de parties (31, 32) pouvant être réunies par emboîtement, qui serrent entre elles la membrane (24).
